# EUROPÄISCHE PATENTSCHRIFT

(11) **EP 3 199 288 B1**
(45) Veröffentlichungstag und Bekanntmachung des Hinweises auf die Patenterteilung: **03.04.2024**
(21) Anmeldenummer: 17152927.4
(22) Anmeldetag: 24.01.2017
(51) Int. Cl.: B23K 10/02, B23K 11/10, B21J 15/08, B23K 11/00

(54) **ELEMENTZUFÜHREINRICHTUNG FÜR EIN SETZ-SCHWEISS-GERÄT, EIN SETZ-SCHWEISS-GERÄT SOWIE EIN VERBINDUNGSVERFAHREN IN FORM EINES MECHANISCH-THERMISCHEN SETZ-SCHWEISS-PROZESSES**
ELEMENT FEED DEVICE OF A SET-WELDING DEVICE, A SET-WELDING DEVICE AND A CONNECTION METHOD IN THE FORM OF A MECHANICALLY THERMAL SET-WELDING PROCESS
DISPOSITIF D'ALIMENTATION EN ÉLÉMENTS D'UN APPAREIL DE PLACEMENT ET DE SOUDAGE, APPAREIL DE PLACEMENT ET DE SOUDAGE ET PROCÉDÉ D'ASSEMBLAGE SOUS LA FORME D'UN PROCESSUS DE PLACEMENT ET DE SOUDAGE MÉCANO-THERMIQUE

(30) Priorität: 28.01.2016 DE 102016101557; 01.02.2016 DE 102016101755
(43) Veröffentlichungstag der Anmeldung: 02.08.2017
(73) Patentinhaber: Böllhoff Verbindungstechnik GmbH, 33649 Bielefeld (DE)
(72) Erfinder: Hartwig-Biglau, Sergej, 32584 Löhne (DE); Schmidt, Konstantin, 32107 Bad Salzuflen (DE)
(74) Vertreter: HWP Intellectual Property

(56) Entgegenhaltungen:
- EP-A1- 2 671 662
- DE-A1-102010 060 141
- DE-A1-102013 207 284
- DE-C- 954 187

## Beschreibung

### 1. Gebiet der Erfindung

Die vorliegende Erfindung betrifft eine Elementzuführeinrichtung eines Setz-Schweiß-Geräts für ein bolzenähnliches Schweißhilfsfügeteil mit Kopf und Schaft, in welchem von einem Elektrodenstempel und einem Elektrodengegenlager zur Herstellung einer Setz-Schweiß-Verbindung eine relative Fügebewegung durchführbar ist Des Weiteren betrifft vorliegende Erfindung ein derartiges Setz-Schweiß-Gerät sowie ein Verbindungsverfahren in Form eines mechanisch-thermischen Setz-Schweiß-Prozesses mithilfe des oben genannten bolzenähnlichen Schweißhilfsfügeteils und des Setz-Schweiß-Geräts

### 2. Hintergrund der Erfindung

im Stand der Technik sind verschiedene Verbindungsverfahren bekannt, die Hilfsfügeteilen verarbeiten. Zu diesen Verbindungsverfahren zählen rein mechanische Verbindungsverfahren, wie bspw. das Stanznieten oder Bolzensetzen. Bei derartigen Vorrichtungen wird das Fügeelement bspw. über einen Profilschlauch oder eine andere druckluftbetriebene Elementzuführanordnung dem Fügekanal des Setzgeräts zugeführt. Innerhalb des Fügekanals bewegt sich der Stempel des Setzgeräts im Rahmen einer Fügebewegung auf einer geraden Bewegungslinie auf bspw. eine Matrize zu, um eine Verbindung herzustellen.

Ein ähnliches rein mechanisches Fügeverfahren wird durch eine Nagelvorrichtung realisiert, der automatisch eine Mehrzahl von Nägeln zugeführt wird. Dazu wird gemäß US 5,492,262 ein in einem Magazin aufgewickelter Nagelstreifen innerhalb einer Zuführvorrichtung abgewickelt, um einzelne Nägel an die Fügevorrichtung zu übergeben. Da diese Nägel zunächst über den Nagelstreifen miteinander verbunden sind, ist gerade das Vereinzeln der Nägel aufwendig und nicht ohne weiteres auf andere Fügeverfahren übertragbar.

DE 10 2010 060 141 A1 beschreibt die Positionierung und Zuführung von Hilfsfügeteilen einer Reibschweißvorrichtung. Die Zuführvorrichtung für die Reibschweißelemente sieht eine Spannbackenanordnung vor, die das Ende eines Zuführkanals für Reibschweißelemente bildet. Die Endposition des Zuführkanals ist direkt unterhalb des

Drehstempels der Reibschweißvorrichtung angeordnet. Ein axial bewegliches Stellelement mit unterschiedlichen Dickenbereichen bezogen auf die Länge des Stellelements ist zwischen den beiden Spannbacken derart angeordnet, dass ein axialer Versatz des Stellelements eine unterschiedlich starke Öffnung der Spannbacken bewirkt. Entsprechend ist ein Dickenbereich des Stellelements und somit ein bestimmter Abstand der Spannbacken der Zufuhr eines Reibschweißelements zugeordnet, während ein größerer Dickenbereich des Stellelements und somit eine größere Öffnung der Spannbacken dafür vorgesehen ist, dass der Drehstempel bei seinem Durchlaufen der beiden Spannbacken das dort positionierte Fügeelement übernimmt und einer Fügeposition zuführt. Aufgrund der Kombination der lateral beweglichen Spannbacken und des axial versetzbaren Stellelements in unmittelbarer Umgebung des Drehstempels handelt es sich hier um eine komplexe und platzintensive Konstruktion, die gerade an die Zufuhr rein mechanischer Drehmomentbelastungen zu einem Fügeelement angepasst ist.

Bei anderen Reibschweißvorrichtungen ist es hingegen von Vorteil, das Reibschweißelement direkt einem Fügekanal der Reibschweißvorrichtung zuzuführen. Dies ist in DE 10 2004 039 398 A1 beschrieben.

Beim Widerstandsschweißen werden im Vergleich zu den oben beschriebenen Zuführkonstruktionen und Zuführprinzipien der Fügeelemente andere Konstruktionen realisiert, da hier neben mechanischen Belastungen auch elektrische Lasten auf das Fügeelement aufgebracht werden. Bspw. offenbart DE 43 18 908 C1 eine indirekte Zufuhr der Schweißhilfsfügeteile zur Fügestelle. Diese Schweißhilfsfügeteile werden zunächst über einen Zuführkanal einer schwenkbaren Übergabevorrichtung zugeführt. Diese Übergabevorrichtung hält das Schweißhilfsfügeteil mithilfe eines Magneten fest. Dann findet eine kombinierte geradlinige Bewegung zum Entfernen des Schweißhilfsfügeteils vom Zuführkanal und eine Schwenkbewegung eines Hebelarms mit diesem Schweißhilfsfügeteil statt. Diese Bewegung positioniert das Schweißhilfsfügeteil unterhalb der einen Schweißelektrode der Schweißvorrichtung. Bevor das tatsächliche Schweißen stattfindet, wird das Schweißhilfsfügeteil innerhalb der Schwei-ßelektrode mithilfe einer Haltevorrichtung angeordnet. Dies gewährleistet, dass noch vor Beginn des Schweißprozesses der Hebelarm und somit die Zuführvorrichtung von den Elektroden der Schweißvorrichtung entfernt werden kann. Da das Schweißhilfsfügeteil lediglich in die Elektrode geklemmt wird, hat dies Ungenauigkeiten in der Positionierung des Schweißhilfsfügeteils an der Fügestelle zur Folge. Des Weiteren ist die hier verwendete Zuführvorrichtung aufgrund der unterschiedlichen auszuführenden Bewegungen und Abstimmungen aufeinander ebenfalls aufwendig in ihrer Konstruktion.

DE 10 2013 207 284 A1 beschreibt ein Setz-Schweiß-Gerät, mit dem ein Schweißhilfsfügeteil unter kombinierten mechanischen und elektrischen Lasten in mindestens zwei Bauteile gesetzt wird. Hier wird die vorteilhafte Erkenntnis genutzt, dass die aus Widerstandsschweißverfahren bekannten elektrischen Lasten einen mechanischen Fügevorgang unterstützen, der zudem einen mit dem mechanischen Fügevorgang abgestimmten Schweißvorgang realisiert. Ähnlich wie bei bekannten Setzgeräten wird hier ein Schweißhilfsfügeteil in den Fügekanal unterhalb des Stempels zugeführt. Während das Schweißhilfsfügeteil dort in einer Zwischenposition gehalten wird, bewegt dann der Stempel des Schweiß-Setz-Geräts das Schweißhilfsfügeteil in Richtung der miteinander zu verbindenden Bauteile. Diese Art der Elementzufuhr sorgt nicht immer für eine ausreichend genaue Positionierung des Schweißhilfsfügeteil an den miteinander zu verbindenden Bauteilen. Dies kann zu Nachteilen bei der Verbindungsqualität und/oder der Verbindungsfestigkeit führen.

Es ist daher die Aufgabe vorliegender Erfindung, ein Setz-Schweiß-Gerät sowie eine Elementzuführeinrichtung für ein derartiges Setz-Schweiß-Gerät bereitzustellen, mit der ein Setz-Schweiß-Vorgang gerade im Vergleich zum Stand der Technik verbessert werden kann und die Vorrichtung einfacher und kostengünstiger ausführbar ist. Dies gilt im Hinblick auf eine mögliche Genauigkeit der Zufuhr von Schweißhilfsfügeteilen wie auch der Positionierung der Schweißhilfsfügeteile zur Vorbereitung des Verbindens der mindestens zwei Bauteile. Entsprechend stellt sich vorliegende Erfindung ebenfalls die Aufgabe, ein verbessertes Verbindungsverfahren mithilfe eines Setz-Schweiß-Geräts bereitzustellen.

### 3. Zusammenfassung der Erfindung

Die obigen Aufgaben werden durch eine Elementzuführeinrichtung gemäß dem unabhängigen Patentanspruch 1, ein Setz-Schweiß-Gerät gemäß dem unabhängigen Patentanspruch 6 sowie durch ein Verbindungsverfahren gemäß dem unabhängigen Patentanspruch 10 gelöst. Weiterentwicklungen und vorteilhafte Ausgestaltungen vorliegender Erfindung gehen aus der folgenden Beschreibung, den begleitenden Zeichnungen sowie den anhängenden Patentansprüchen hervor.

Die erfindungsgemäße Elementzuführeinrichtung eines Setz-Schweiß-Geräts für ein bolzenähnliches Schweißhilfsfügeteil mit Kopf und Schaft, in dem von einem Elektrodenstempel und einem Elektrodengegenlager zur Herstellung einer Setz-Schweiß-Verbindung eine relative Fügebewegung entlang einer ersten geraden Bewegungslinie durchführbar ist, weist die folgenden Merkmale auf: zwei scherenartig angeordnete Spannbackenhebel, von denen mindestens ein Spannbackenhebel schwenkbar angeordnet ist und beide Spannbackenhebel gemeinsam einen temporär einseitig verschließbaren Sacklochkanal mit einer nestartigen Endposition bilden, in welchem ein Schweißhilfsfügeteil an der Endposition aufnehmbar ist, ein erstes Stellglied, mit dem der Sacklochkanal entlang einer anderen als der ersten Bewegungslinie bewegbar ist, so dass die nestartige Endposition des Sacklochkanals zwischen dem Elektrodenstempel und dem Elektrodengegenlager positionierbar ist, und ein zweites Stellglied, mit dem der Sacklochkanal parallel zur ersten Bewegungslinie kraft- und/oder weggesteuert bewegbar ist, so dass ein an der nestartigen Endposition des Sacklochkanals gehaltenes Schweißhilfsfügeteil in einem Festsitz angreifend an dem Elektrodenstempel positionierbar ist.

Die erfindungsgemäße Elementzuführeinrichtung ist als fester Bestandteil eines Setz-Schweiß-Geräts oder als modulare Komponente realisierbar. Eine derart modulare Komponente ist mit bekannten Setzgeräten, Schweißgeräten oder Setz-Schweiß-Geräten kombinierbar und somit nachrüstbar. Diese Elementzuführeinrichtung zeichnet sich dadurch aus, dass zunächst über den definierten Sacklochkanal mit nestartiger Endposition Schweißhilfsfügeteile dem Setz-Schweiß-Gerät einzeln zuführbar sind. Somit stellt die Elementzuführeinrichtung nicht nur einzelne Schweißhilfsfügeteile für das Verbindungsverfahren bereit, sondern sie vereinzelt diese Schweißhilfsfügeteile im Vorfeld des Verbindens von mindestens zwei Bauteilen. Die Elementzuführeinrichtung ist neben dem Sacklochkanal mit der nestartigen Endposition mit zwei verschiedenen Stellgliedern ausgestattet, die die nestartige Endposition und somit das Schweißhilfsfügeteil in eine gewünschte Anordnung zwischen einem Stempel und einem Gegenlager des Setz-Schweiß-Geräts bringen. Vorzugsweise sind der Stempel und das Gegenlager des Setz-Schweiß-Geräts als Elektrodenstempel und Elektrodengegenlager ausgeführt, um während des Verbindens der mindestens zwei Bauteile mithilfe des Schweißhilfsfügeteils einzeln oder in Kombination mechanische und elektrische Lasten im Fügebereich erzeugen zu können. Die beiden Stellglieder der Elementzuführeinrichtung eröffnen die Möglichkeit, dass in der nestartigen Endposition befindliche einzelne Schweißhilfsfügeteil gezielt angrenzend am Stempel oder am Gegenlager oder in einer Zwischenposition zwischen Stempel und Gegenlager anzuordnen und dort halten zu können. Gemäß einer bevorzugten Ausführungsform vorliegender Erfindung wird ein Festsitz des Schweißhilfsfügeteils am Stempel hergestellt und gehalten. Festsitz bedeutet in diesem Zusammenhang, dass das Schweißhilfsfügeteil derart mit dem Stempel in Kontakt steht oder an diesem anliegt, dass mögliche Zwischenräume oder ein mögliches Spiel zwischen Stempel und Schweißhilfsfügeteil vermeiden werden. Vorzugsweise wird dazu das Schweißhilfsfügeteil bis zum Erreichen einer Sollkraft in Anlage mit dem Stempel bewegt. Nachfolgend wird die zwischen Stempel und Schweißhilfsfügeteil wirkende Sollkraft aufrechterhalten, bis der Stempel über das Schweißhilfsfügeteil die Materiallagen gegen das Gegenlager vorspannt, wie unten näher erläutert ist. Zudem ermöglichen die beiden Stellglieder oder auch nur ein ausgewähltes dieser Stellglieder ein gezieltes Bewegen des Schweißhilfsfügeteils in der nestartigen Endposition gemeinsam mit dem Stempel oder mit der Kombination aus Stempel und Gegenlager des Setz-Schweiß-Geräts. Um diese gezielte Positionierung des Schweißhilfsfügeteils vorzugsweise angrenzend an den Stempel oder das Gegenlager kontrolliert durchführen zu können, ist der durch die Endposition zurückgelegte Weg und/oder die auf die Endposition und somit das Schweißhilfsfügeteil wirkende Kraft aufgrund der Anlage des Schweißhilfsfügeteils am Stempel oder am Gegenlager gezielt erfassbar und auswertbar. Vorzugsweise werden zu diesem Zweck die erfassten Wegund/oder Kraftdaten an eine Steuereinheit der Elementzuführeinrichtung oder an eine gemeinsame Steuereinheit von Elementzuführeinrichtung und Setz-Schweiß-Gerät oder an die Steuereinrichtungen der Elementzuführeinrichtung und des Setz-Schweiß-Geräts weitergeleitet. Basierend auf diesen zusätzlichen Informationen werden das Verbindungsverfahren (siehe unten) und die Elementzufuhr aufeinander abgestimmt.

Gemäß einer bevorzugten Ausführungsform der Elementzuführeinrichtung umfasst das erste Stellglied ein lineares Stellglied, mit dem die Endposition des Sacklochkanals senkrecht zur ersten Bewegungslinie linear bewegbar ist. Um mithilfe des Setz-Schweiß-Geräts mindestens zwei Bauteile miteinander verbinden zu können, bewegen sich der Elektrodenstempel und das Elektrodengegenlager relativ zueinander in einer Fügebewegung entlang der ersten geraden Bewegungslinie. Zur Herstellung der Verbindung ist es daher erforderlich, dass ein zuzuführendes Schweißhilfsfügeteil entlang dieser ersten geraden Bewegungslinie zwischen dem Elektrodenstempel und dem Elektrodengegenlager gezielt positioniert wird Dies gewährleistet, dass die durch den Elektrodenstempel und das Elektrodengegenlager aufzubringenden mechanischen oder elektrischen Lasten optimal in das Schweißhilfsfügeteil eingeleitet werden. Daher umfasst bevorzugt die Elementzuführeinrichtung zwei Stellglieder, von denen ein Stellglied eine Bewegung entlang der ersten Bewegungslinie und das zweite Stellglied eine lineare Bewegung senkrecht zur ersten Bewegungslinie realisiert. Auf dieser Grundlage ist das Schweißhilfsfügeteil an beliebigen Positionen zwischen Elektrodenstempel und Elektrodengegenlager anordenbar und in die Fügebewegung von Elektrodenstempel und Elektrodengegenlager zu einem ausgewählten Zeitpunkt integrierbar. Dies gewährleistet ebenfalls, dass das Schweißhilfsfügeteil gezielt anliegend am Elektrodenstempel oder an den auf dem Elektrodengegenlager positionierten Bauteilen anordenbar ist. Diese gezielte Anordnung, die bevorzugt kraft- und/oder weggesteuert umgesetzt werden kann, ermöglicht ein Verbindungsverfahren ohne die Nutzung eines Niederhalters zum Fixieren der Bauteile. Das hat entsprechend die positive Konsequenz, da das Setz-Schweiß-Gerät in Kombination mit der bevorzugten Elementzuführeinrichtung ohne Niederhalter und somit einfacher ausgestaltet werden kann. Des Weiteren sind die auf den Niederhalter bezogenen Steuerkonzepte bevorzugt verzichtbar, wenn das Verbindungsverfahren basierend auf der Nutzung der Elementzuführeinrichtung realisiert wird. Natürlich ist es optional ebenfalls denkbar, den Niederhalter in Kombination mit der Elementzuführeinrichtung einzusetzen.

Gemäß einer weiteren bevorzugten Ausführungsform der vorliegenden Elementzuführeinrichtung weist der Sacklochkanal eine schwenkbare und nur in Richtung der Endposition durch ein Schweißhilfsfügeteil überwindbare Sperrklinke auf. Diese vorzugsweise hebelartig ausgebildete Sperrklinke ist durch ein in den Sacklochkanal gleitendes Schweißhilfsfügeteil überwindbar, während diese Sperrklinke eine Bewegung des Schweißhilfsfügeteils aus dem Sacklochkanal heraus verhindert. Erfindungsgemäß bevorzugt ist die Sperrklinke hebelartig ausgebildet. Dieser Hebel hat eine Längserstreckung, die parallel zum Verlauf des Sacklochkanals angeordnet ist. Um die oben zusammengefasste Funktion zu realisieren, weist die Sperrklinke einen Drehpunkt an ihrem der Endposition abgewandten Ende auf.

Gemäß einer weiteren bevorzugten Ausführungsform der Elementzuführeinrichtung sind die Spannbackenhebel des Sacklochkanals an einer Innenseite nutartig ausgestaltet, so dass ein Kopf eines Schweißhilfsfügeteils darin führbar und bewegbar formschlüssig gehalten ist. Dieser Formschluss zwischen Kopf des Schweißhilfsfügeteils und dem Sacklochkanal stellt sicher, dass das Schweißhilfsfügeteil selbst in einem Überkopfbetrieb des Setz-Schweiß-Geräts bzw. der Elementzuführeinrichtung nicht aus dem Sacklochkanal fallen kann.

Ein weitere bevorzugte Ausführungsform vorliegender Erfindung sieht vor, dass die Elementzuführeinrichtung eine Steuereinheit umfasst, mit der erfasste Betriebsdaten der Elementzuführeinrichtung auswertbar und mindestens ein Befehle für zumindest eine verbundene Komponente, vorzugsweise eine Zentralsteuerung eines Setz-Schweiß-Geräts, erzeugbar und an diese übermittelbar ist. Zunächst stellt die Steuereinheit sicher, dass die Elementzuführeinrichtung modular einsetzbar und autark betreibbar ist. Dabei überwacht die Steuereinheit vorzugsweise die eigene Betriebsweise und gibt anhand der ausgewerteten Daten die nächsten Schritte der Elementzuführeinrichtung vor. Weiterhin bevorzugt ist die Steuereinheit derart ausgelegt, dass sie mit einer Zentralsteuerung des Setz-Schweiß-Geräts zusammenarbeitet. Dies kann darin bestehen, dass die Steuereinheit als Master-Komponente (siehe unten) der als Slave-Komponente arbeitenden Zentralsteuerung des Setz-Schweiß-Geräts vorgibt, ob und/oder wann und/oder welcher nächste Schritt durch das Setz-Schweiß-Gerät durchzuführen ist. So beurteilt vorzugsweise die Steuerung der Elementzuführvorrichtung, ob das Schweißhilfsfügeteil ausreichend zwischen Stempel und Gegenlager mechanisch vorgespannt ist. Hat sie zudem erfasst, dass die Elementzuführvorrichtung vom Schweißhilfsfügeteil entfernt worden ist, gestattet sie der Zentralsteuerung bzw. gibt dieser frei, mit der Setzbewegung des Schweißhilfsfügeteils durch den Stempel zu beginnen. Zudem ist es bevorzugt, dass die Steuereinheit der Zentralsteuerung vorgibt, wann und/oder wie schnell eine Stempelbewegung oder ein ähnlicher Schritt durchzuführen sind.

Vorliegende Erfindung umfasst zudem ein Setz-Schweiß-Gerät für ein Schweißhilfsfügeteil, das einen Elektrodenstempel und ein Elektrodengegenlager aufweist, mit denen eine relative Fügebewegung entlang einer ersten geraden Bewegungslinie durchführbar ist, um eine Setz-Schweiß-Verbindung herzustellen, und das eine Elementzuführeinrichtung gemäß den oben beschriebenen Ausführungsformen vorliegender Erfindung aufweist.

Ein derartiges Setz-Schweiß-Gerät ist in DE 10 2013 207 284 A1 beschrieben. Dieses Setz-Schweiß-Gerät zeichnet sich dadurch aus, dass ein Schweißhilfsfügeteil unter mechanischen und elektrischen Lasten einzeln oder kombiniert mit mindestens zwei Bauteilen verbindbar ist. Das Setz-Schweiß-Gerät realisiert somit eine Kombination eines bekannten mechanischen Fügeverfahrens und eines Widerstandsschweißverfahrens, um mindestens eine erste und eine zweite Materiallage miteinander zu verbinden. In diesem Zusammenhang wird das bolzenähnliche Schweißhilfsfügeteil in die mindestens eine erste Materiallage gesetzt und an der zweiten Materiallage aus elektrisch leitendem Material oder an einem elektrisch leitenden Bereich der zweiten Materiallage mechanisch/thermisch verformt und mit dieser durch einen Schweißvorgang im Kontaktbereich stoffschlüssig verbunden. Es ist ebenfalls bevorzugt, dass das Schweißhilfsfügeteil in die erste Materiallage unter Anwendung kombinierter mechanischer und elektrischer Lasten gesetzt wird

Im Hinblick auf die Materialgestaltung der miteinander zu verbindenden Materiallagen sowie auf die Kombination von elektrischen und mechanischen Lasten bei der Nutzung des Setz-Schweiß-Geräts wird ebenfalls auf DE 10 2013 207 284 verwiesen, in der diese Details umfassend offenbart sind. Diese Details sind auf das hier beschriebene Setz-Schweiß-Gerät und die Nutzung dieses Setz-Schweiß-Geräts in gleicher Weise anwendbar. Entsprechend umfasst das Setz-Schweiß-Gerät den bereits oben erwähnten Stempel und das gegenüber dem Stempel angeordnete Gegenlager. Der Stempel und das Gegenlager können sowohl mechanische wie auch elektrische Belastungen in dem Schweißhilfsfügeteil erzeugen, indem sie als Elektrodenstempel und Elektrodengegenlager ausgeführt sind. Die Bewegung des Stempels und somit die auf das Schweißhilfsfügeteil aufgebrachte Kraft erzeugt ein Antrieb Dieser Antrieb ist gemäß unterschiedlicher bevorzugter Ausführungsformen des Setz-Schweiß-Geräts pneumatisch, elektrisch oder hydraulisch realisiert. Zudem wird der Antrieb über eine Steuer- und/oder Regeleinrichtung angesteuert.

Die dem Stempel und dem Gegenlager zugeführten einstellbaren elektrischen Ströme dienen einerseits der Durchführung des Schweißvorgangs (siehe unten). Bevorzugt wird das bolzenähnliche Schweißhilfsfügeteil an der zweiten Materiallage aus schweißbarem Material oder an Abschnitten aus schweißbarem Material in dieser Materiallage flächig verschweißt. Dieses Verschweißen, dem kein Setzen des Schweißhilfsfügeteils in diese zweite Materiallage vorausgeht, erfolgt an der Oberfläche der zweiten Materiallage bevorzugt über ein elektrisches Widerstandsschweißen. Vorzugsweise sind dazu im Setz-Schweiß-Gerät der Elektrodenstempel mit einem negativen elektrischen Potential und das Elektrodengegenlager mit einem positiven elektrischen Potential verbunden, um einen Schweißprozess zu unterstützen (siehe unten). Alternativ dazu ist es ebenfalls bevorzugt, die Elementzuführeinrichtung an der Plus-Elektrode des Setz-Schweiß-Geräts anzuordnen. Bezugnehmend auf das Setz-Schweiß-Gerät liegt daher am Stempel ein positives elektrisches Potential an. Des Weiteren dienen die zugeführten elektrischen Ströme bevorzugt einem Erwärmen des Schweißhilfsfügeteils und benachbarter Bereiche der miteinander zu verbindenden Materiallagen. Entsprechend wird das Setz-Schweiß-Gerät auch als Erwärmungseinrichtung genutzt, um gezielt erwärmende elektrische Ströme zumindest im Schweißhilfsfügeteil zu erzeugen.

Gemäß einer weiteren bevorzugten Ausführungsform vorliegender Erfindung ist die Elementzuführvorrichtung derart am Setz-Schweiß-Gerät befestigt ist, dass sie bei einer Stempelbewegung gemeinsam mit dem Stempel verfahrbar ist. Dies bedeutet, dass die Elementzuführvorrichtung bevorzugt am Stempel selbst befestigt ist. Gemäß einer weiteren Ausführungsform ist die Elementzuführvorrichtung an einem Konstruktionselement des Setz-Schweiß-Geräts befestigt, das gemeinsam mit dem Stempel durch den Antrieb des Schweiß-Setz-Geräts verfahren wird. Diese Konstruktion gewährleistet, dass vorzugsweise die Elementzuführvorrichtung ein passend am Stempel positioniertes Schweißhilfsfügeteil lediglich in seiner Position halten muss, während der Stempel in Richtung Gegenlager bewegt wird. Daher sind keine abgestimmten Bewegungen des Antriebs des Stempels und der Stellglieder der Elementzuführeinrichtung erforderlich.

Es ist zudem bevorzugt, das Setz-Schweiß-Gerät mit einer Zentralsteuerung auszustatten, die vorzugsweise als Slave-Komponente mit einer als Master-Komponente konfigurierten Steuereinheit der Elementzuführeinrichtung Daten und/oder Befehle austauscht.

Vorliegende Erfindung umfasst zudem ein Verbindungsverfahren in Form eines mechanisch-thermischen Setz-Schweiß-Prozesses mithilfe des bolzenähnlichen Schweißhilfsfügeteils für mindestens eine erste Materiallage ohne Vorlochen der mindestens einen ersten Materiallage mit mindestens einer zweiten Materiallage aus schweißbarem Material oder mit einem Abschnitt aus schweißbarem Material,, wobei das Schweißhilfsfügeteil mithilfe der erfindungsgemäßen Elementzuführeinrichtung während des Verbindungsverfahrens zugeführt und gehalten wird. Dieses Verbindungsverfahren weist die folgenden Schritte auf: Positionieren der mindestens einen ersten und der mindestens einen zweiten Materiallage zwischen einem Elektrodenstempel und einem Elektrodengegenlager, zwischen denen eine relative Fügebewegung entlang einer ersten geraden Bewegungslinie durchführbar ist, Positionieren des Schweißhilfsfügeteils zwischen dem Elektrodenstempel und dem Elektrodengegenlager, Bewegen des Schweißhilfsfügeteils kraftgesteuert und/oder weggesteuert in Anlage mit dem Elektrodenstempel, anschließend an den vorhergehenden Schritt gemeinsames Bewegen von Elektrodenstempel und Schweißhilfsfügeteil bis zur Anlage an den Materiallagen, die sich am Elektrodengegenlager abstützen, und dadurch mechanisches Vorspannen der Materiallagen und Verbinden des Schweißhilfsfügeteils und der Materiallagen mithilfe mechanischer und thermischer Lasten.

Das mechanisch-thermische Verbindungsverfahren wird durch die gezielte Positionierung des Schweißhilfsfügeteils zwischen dem Elektrodenstempel und dem Elektrodengegenlager optimiert. Im Speziellen realisiert gerade das kraftgesteuerte und/oder weggesteuerte Bewegen des Schweißhilfsfügeteils angeordnet innerhalb der nestartigen Endposition des Sacklochkanals in Anlage mit dem Elektrodenstempel eine neue Ausgangsposition für das Verbindungsverfahren als generell aus dem Stand der Technik bekannt ist. Denn diese Anlage des Schweißhilfsfügeteils am Elektrodenstempel gewährleistet zunächst eine genaue Positionierung zwischen Elektrodenstempel und Schweißhilfsfügeteil. Mithilfe der bevorzugten nachfolgenden gemeinsamen Bewegung von Schweißhilfsfügeteil und Elektrodenstempel in bevorzugt permanenter Anlage aneinander ist diese definierte Kombination des Weiteren mit den zu verbindenden Materiallagen und dem Gegenlager kombinierbar. Diese Kombination von Elektrodenstempel und Schweißhilfsfügeteil schließt zunächst Setzvorgänge zwischen Elektrodenstempel und Schweißhilfsfügeteil aus. Zudem wird eine mechanische Last des Elektrodenstempels direkt über das Schweißhilfsfügeteil auf die Materiallagen übertragen, die sich am Gegenlager abstützen. Somit sorgt diese gemeinsame Bewegung aus Elektrodenstempel und Schweißhilfsfügeteil für ein bevorzugtes Vorspannen der Materiallagen auf dem Gegenlager. Während die Elementzuführeinrichtung die stabile Position des Schweißhilfsfügeteils in Anlage am Elektrodenstempel gewährleistet, realisiert die kombinierte Bewegung aus Elektrodenstempel und Schweißhilfsfügeteil durch Vorspannen der Materiallagen am Gegenlager die Funktionalität eines Niederhalters. Entsprechend ist aufgrund der erfindungsgemäßen Elementzuführeinrichtung ein Niederhalter in dem Setz-Schweiß-Gerät verzichtbar.

Gemäß einer bevorzugten Ausführungsform des erfindungsgemäßen Verbindungsverfahrens wird das Schweißhilfsfügeteil im Festsitz (siehe oben), vorzugsweise mit mindestens einer Sollkraft, in Anlage am Elektrodenstempel gehalten. Zudem werden vorzugsweise, wie oben bereits erwähnt worden ist, die Materiallagen ohne Niederhalter vorgespannt.

Gemäß vorliegender Erfindung ist es ebenfalls bevorzugt, das Schweißhilfsfügeteil durch die Elementzuführeinrichtung freizugeben, nachdem das Schweißhilfsfügeteil und die Materiallagen zwischen dem Elektrodenstempel und dem Elektrodengegenlager vorgespannt worden sind. Sofern das Schweißhilfsfügeteil ohne Niederhalter oder einen umgebenen Zuführkanal zugeführt wird, ist zunächst eine Fixierung des Schweißhilfsfügeteils durch eine mechanische Vorspannung des Elektrodenstempels auf das Schweißhilfsfügeteil und von diesem über die zu verbindenden Materiallagen auf das Elektrodengegenlager erforderlich. Erst dann befindet sich das Schweißhilfsfügeteil in einer definierten und gesicherten Position zwischen Elektrodenstempel und Elektrodengegenlager, so dass die Elementzuführeinrichtung das Schweißhilfsfügeteil freigeben kann.

Gemäß einer weiteren bevorzugten Ausführungsform des erfindungsgemäßen Verbindungsverfahrens wird eine durch das Schweißhilfsfügeteil auf den Elektrodenstempel aufgebrachte Kraft mithilfe eines Kraftsensors erfasst und/oder es wird ein mittels einer Elementzuführeinrichtung zurückgelegter Weg des Schweißhilfsfügeteils in Richtung des Elektrodenstempels erfasst. Diese erfassten Daten, die vorzugsweise durch eine Steuereinheit der Elementzuführvorrichtung oder durch eine Steuereinheit des Setz-Schweiß-Geräts oder durch eine kombinierte Steuereinheit beider Systeme verarbeitet werden, bilden die Grundlage für eine definierte Positionierung des Schweißhilfsfügeteils. In diesem Zusammenhang werden bevorzugt die Steuerung der Elementzuführeinrichtung (Master) und die Zentralsteuerung des Setz-Schweiß-Geräts (Slave) in einer Master-Slave-Kombination zusammengeschaltet. Das bedeutet, dass die Steuerung der Elementzuführeinrichtung die definierte Positionierung des Schweißhilfsfügeteils zwischen Elektrodenstempel und Elektrodengegenlager überwacht. Sobald die Steuereinheit der Elementzuführeinrichtung eine korrekte Positionierung des Schweißhilfsfügeteils der Zentralsteuerung des Setz-Schweiß-Geräts bestätigt hat, wird das gezielte Verbinden der mindestens zwei Materiallagen durch das Setz-Schweiß-Gerät gestartet. Insofern arbeitet bevorzugt die Steuereinheit der Elementzuführeinrichtung als Master, während die Steuereinheit des Setz-Schweiß-Geräts diesen Vorgaben folgt. Es ist natürlich ebenfalls bevorzugt, dass der oben beschriebene Vorgang durch nur eine Steuerung, also eine gemeinsame Steuerung für das Setz-Schweiß-Gerät und die Elementzuführeinrichtung, überwacht wird.

Weiterhin bevorzugt umfasst das erfindungsgemäße Verbindungsverfahren die weiteren Schritte: Übermitteln der erfassten Kraft und/oder des erfassten Wegs an eine Steuereinheit und Starten eines Zustellens des Schweißhilfsfügeteils mit dem Elektrodenstempel in Richtung des Elektrodengegenlagers nach Erreichen einer Sollkraft und/oder eines Sollwegs. In weiterer bevorzugter Ausgestaltung dieses Vorgehens wird die erfasste Kraft und/oder der erfasste Weg an die Steuereinheit der Elementzuführeinrichtung übermittelt, die vorzugsweise als Master-Steuerung arbeitet. Nach Auswertung der erhaltenen Daten und vorzugsweise positiver interner Bestätigung ihrer Richtigkeit gestattet die Steuereinheit der Elementzuführeinrichtung daraufhin der vorzugsweise als Slave-Steuerung arbeitenden Zentralsteuerung des Setz-Schweiß-Geräts, das Verbindungsverfahren fortzusetzen. Es ist ebenfalls bevorzugt, dass die Steuerung der Elementzuführeinrichtung der Zentralsteuerung vorgibt, das Verbindungsverfahren mit einem bestimmten Schritt fortzusetzen. Zudem ist es bevorzugt, dass die folgenden Schritte durchgeführt werden: Einpressen und Verschweißen des Schweißhilfsfügeteils in den Materiallagen, vorzugsweise Stauchen und Verspannen der Verbindung aus Materiallagen und Schweißhilfsfügeteils durch Aufbringen einer Kraft mit dem Elektrodenstempel, und Lösen des Elektrodenstempels und des Elektrodengegenlagers von den verbundenen Materiallagen.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Fig. 1: eine perspektivische Teilansicht einer bevorzugten Ausführungsform eines Setz-Schweiß-Geräts mit einer erfindungsgemäß bevorzugten Elementzuführeinrichtung,
- Fig. 2: eine vergrößerte Ansicht des Stempels und der Elementzuführeinrichtung gemäß Fig. 1,

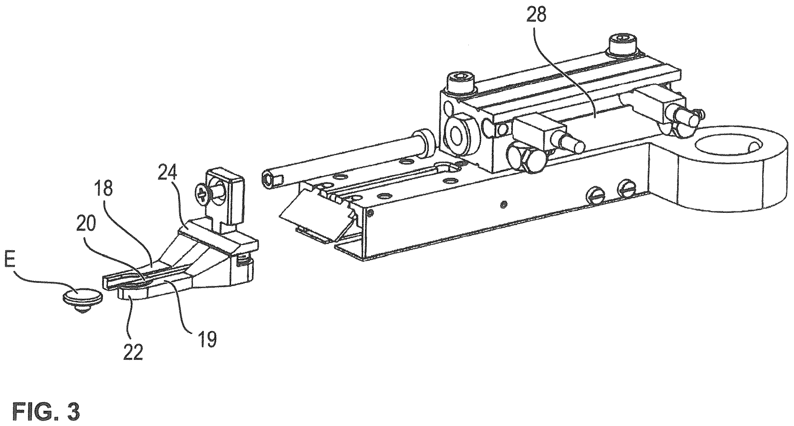

- Fig. 3: eine Explosionsdarstellung einer bevorzugten Ausführungsform der Elementzuführeinrichtung aus Fig. 1,

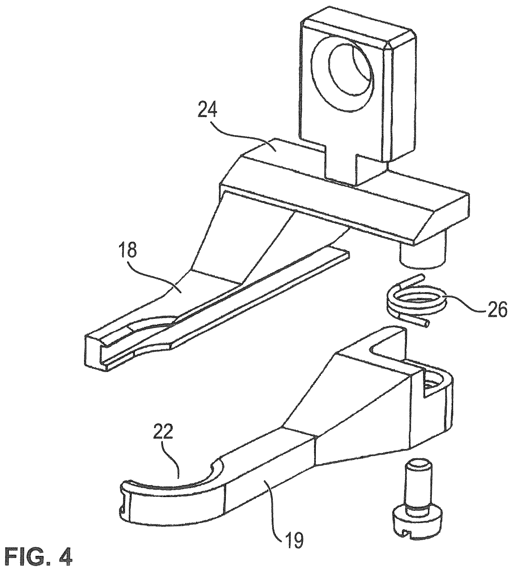

- Fig. 4: eine Explosionsdarstellung der bevorzugten Spannbacken, die den Sacklochkanal bilden,

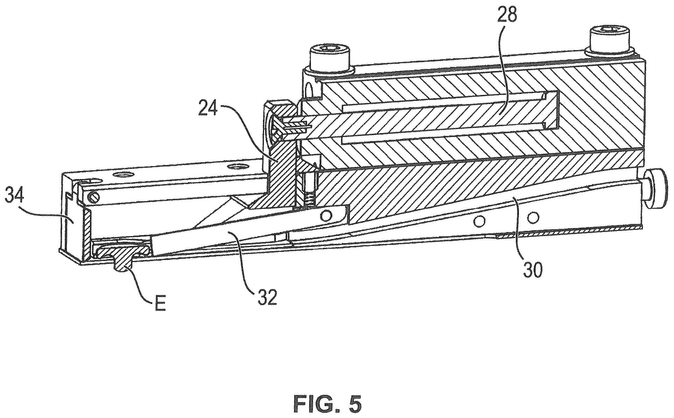

- Fig. 5: eine teilweise Schnittdarstellung der bevorzugten Elementzuführeinrichtung gemäß Fig. 1,
- Fig. 6.1 bis 6.9: unterschiedliche Sequenzen des bevorzugten Verbindungsverfahrens, das mit dem Setz-Schweiß-Gerät mit Elementzuführeinrichtung realisierbar ist,
- Fig. 7: eine Darstellung eines bevorzugten Kraftverlaufs und eines bevorzugten Stromverlaufs in Abhängigkeit von der Zeit für ein erfindungsgemäß bevorzugtes Verbindungsverfahren,

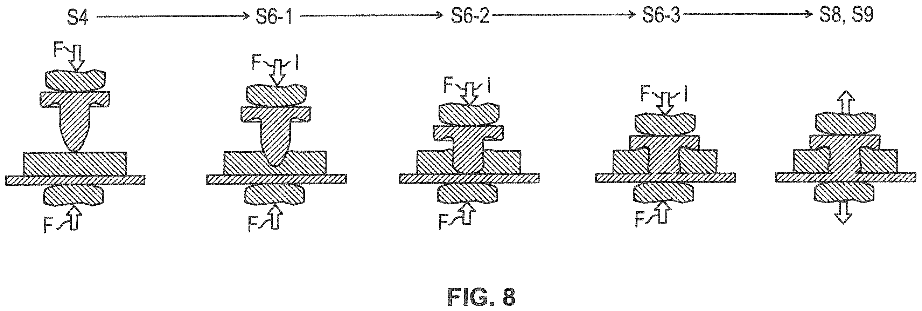

- Fig. 8: eine schematische Darstellung der bevorzugten elektrischen und/oder mechanischen Lasten während des bevorzugten Verbindungsverfahrens und

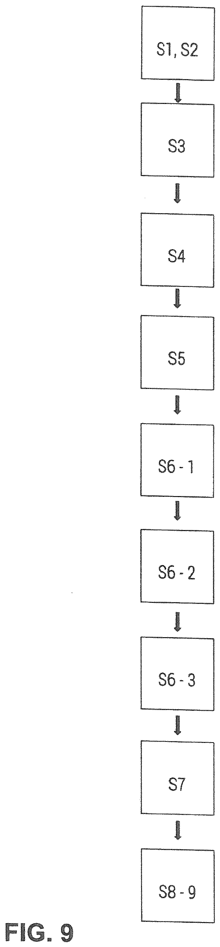

- Fig. 9: ein Flussdiagramm für eine bevorzugte Ausführungsform des Verbindungsverfahrens.

### 5. Detaillierte Beschreibung der bevorzugten Ausführungsformen

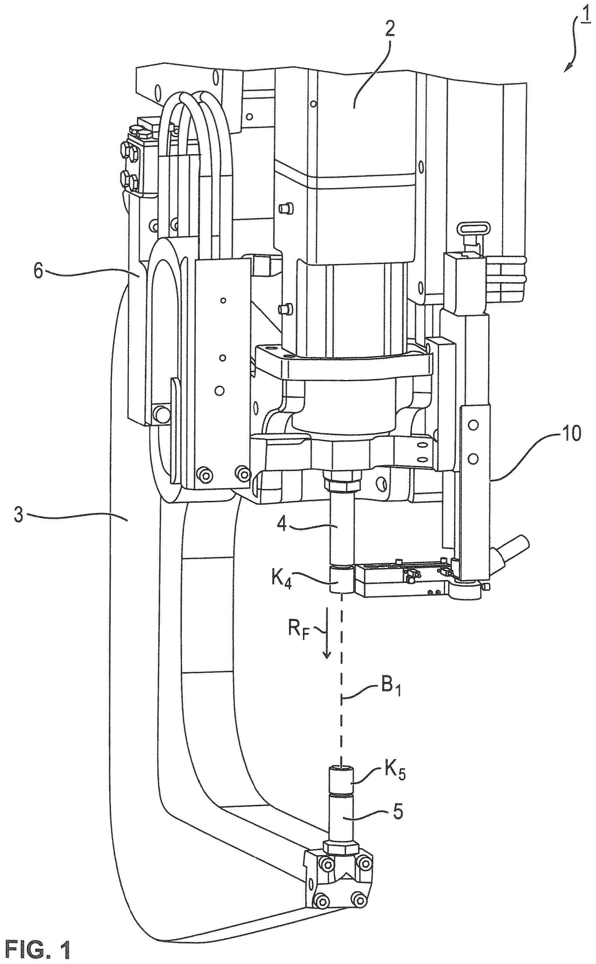

Figur 1 zeigt eine bevorzugte Ausführungsform eines Setz-Schweiß-Geräts 1. Dieses entspricht in seiner wesentlichen Struktur und funktionellen Verfahrensweise dem Setz-Schweiß-Gerät der DE 10 2013 207 284 A1. Zudem wird das Setz-Schweiß-Gerät 1 der Figur 1 zum Verbinden von mindestens einer ersten Materiallage A und mindestens einer zweiten Materiallage B mithilfe eines Schweißhilfsfügeteils E unter mechanisch-thermischen Lasten eingesetzt, wie es in DE 10 2013 207 284 A1 beschrieben ist. Daher wird zur Definition des Aufbaus und der Funktionsweise des Setz-Schweiß-Geräts 1 sowie zur Definition der miteinander zu verbindenden Materiallagen A, B und des Schweißhilfsfügeteils E auf die DE 10 2013 207 284 A1 verwiesen.

Das Setz-Schweiß-Gerät 1 gemäß Figur 1 umfasst an einem bekannten C-Bügel 3 einander gegenüberliegend angeordnet ein Gegenlager 5 und einen Stempel 4. Der Stempel 4 wird über die Antriebseinheit 2 in Fügerichtung R_{F} bewegt. Somit führen der Stempel 4 und das Gegenlager 5 eine Relativbewegung zueinander entlang der geraden Bewegungslinie B₁ aus. Zudem umfasst das Setz-Schweiß-Gerät 1 eine elektrische Versorgungseinheit oder ein Schweißmodul 6, so dass über den Stempel 4 und das Gegenlager 5 elektrische Lasten, bspw. ausreichend hohe erwärmende Ströme oder Schweißströme, auf die miteinander zu verbindenden Materiallagen A, B und das Schweißhilfsfügeteil E aufgebracht werden können. Entsprechend sind der Stempel 4 und das Gegenlager 5 bevorzugt als Elektrodenstempel und Elektrodengegenlager ausgestaltet, mit denen auch Schweißvorgänge durchführbar sind. Mit anderen Worten sind der Stempel 4 und das Gegenlager 5 gemäß einer bevorzugten Ausführungsform vorliegender Erfindung elektrisch leitend ausgestaltet. Um die Abnutzung des Elektrodenstempels 4 und des Elektrodengegenlagers 5 während des Schweißens besser kontrollieren zu können, sind der Stempel 4 und das Gegenlager 5 mit austauschbaren und/oder bearbeitbaren Schweißkappen K₄ und K₅ ausgestattet.

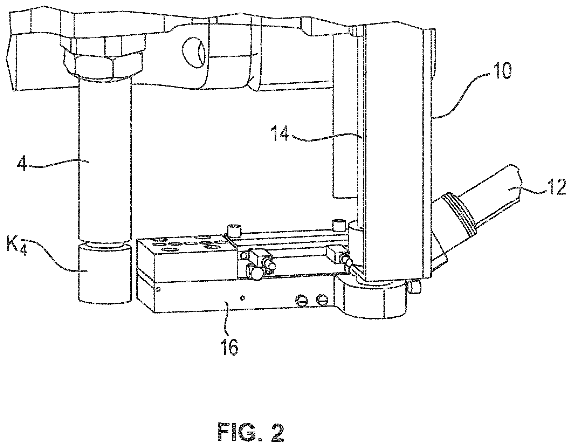

Eine vergrößerte Darstellung der bevorzugten Elementzuführeinrichtung 10 zeigt Figur 2. Die Elementzuführeinrichtung 10 umfasst ein Stellglied 14, das bevorzugt parallel zur Fügerichtung R_{F} angeordnet und längenverstellbar ist. Dieses linear wirkende Stellglied 14 ist vorgesehen, um die Elementzuführeinrichtung 10 oder zumindest ein damit zugeführtes und darin positioniertes Schweißhilfsfügeteil E parallel zur geraden Bewegungslinie B₁ zu versetzen. Dies schafft die Grundlage dafür, dass bevorzugt ein in Anlage mit dem Stempel 4 befindliches Schweißhilfsfügeteil E gemeinsam mit dem Stempel 4 in Fügerichtung R_{F} versetzbar ist (siehe unten). Da die Antriebseinheit 2 den Stempel 4 und das Stellglied 14, vorzugsweise eine Endposition mit Schweißhilfsfügeteil E, in abgestimmter Weise gemeinsam bewegen, sind die auf dem Gegenlager 5 angeordneten Materiallagen A, B dadurch gezielt mechanisch vorspannbar (siehe unten). Weiterhin bevorzugt ist die Elementzuführeinrichtung 10 derart mit der Stempelseite des Setz-Schweiß-Geräts 1 verbunden, dass sie Antriebseinheit 2 gemeinsam mit dem Stempel 4 auch die Elementzuführeinrichtung 10 versetzt.

Das Schweißhilfsfügeteil E wird bevorzugt über einen Profilschlauch 12 oder einen Zuführkanal mittels Druckluft der Elementzuführeinrichtung 10 zugeführt. Aus dem Profilschlauch 12 gelangt es über eine Einlaufbahn 30 in einem geschlossenen Gehäuse 16 in einen Sacklochkanal 20. Der Sacklochkanal 20 wird durch zwei scherenartig angeordnete Spannbackenhebel 18, 19 definiert. Zumindest einer der Spannbackenhebel 18 ist fest an einer Brücke 24 angeordnet. Der andere Spannbackenhebel 19 ist um eine Achse schwenkbar angeordnet und mit einer Feder 26 in Richtung des Spannbackenhebels 18 federvorgespannt. Bevorzugt sind die Spannbackenhebel 18, 19 an der einander zugewandten Seite nutartig ausgebildet. Die nutartige Ausgestaltung dient bevorzugt der formschlüssigen Aufnahme und Führung des Kopfes des Schweißhilfsfügeteils E. Auf diese Weise ist gewährleistet, dass auch in einem Überkopfbetrieb des Setz-Schweiß-Geräts 1 das Schweißhilfsfügeteil nicht aus dem Sacklochkanal 20 fallen kann.

An einem dem Profilschlauch 12 abgewandten Ende des Sacklochkanals 20 ist eine nestartige Endposition 22 definiert, die der Aufnahme und dem Halten eines zugeführten Schweißhilfsfügeteils E dient. Im Bereich der nestartigen Endposition 22 ist zumindest eine Spannbacke 19 klauenartig ausgebildet, während die andere bevorzugt geradlinig verläuft. Diese Formgebung stellt sicher, dass ein zugeführtes Schweißhilfsfügeteil E zunächst in der Endposition 22 gehalten wird. Damit ist der Sacklochkanal 20 zeitweise einseitig geschlossen. Da die Spannbacke 19 gegen die wirkende Federkraft ausschwenkbar ist oder beide Spannbackenhebel 18, 19 bevorzugt schwenkbar angeordnet sein können, kann der Sacklochkanal 20 gezielt geöffnet werden. Entsprechend wird dadurch das Schweißhilfsfügeteil E aus der Endposition 22 freigegeben.

Erfindungsgemäß bevorzugt umfasst die Elementzuführeinrichtung 10 ein weiteres Stellglied 28. Dieses führt bevorzugt eine geradlinige Bewegung senkrecht zur Fügerichtung R_{F} bzw. zur Bewegungslinie B₁ aus. Es ist ebenfalls bevorzugt, hier eine schwenkende oder ein in beliebiger Richtung verfahrendes Stellglied 28 vorzusehen. Die durch das Stellglied 28 zu realisierende Funktion besteht bevorzugt darin, das Schweißhilfsfügeteil E unterhalb des Stempels 4, vorzugsweise auf der Bewegungslinie B₁, zu positionieren. Dies stellt sicher, dass das Schweißhilfsfügeteil E durch gemeinsames Bewegen des Stempels 4 und der Elementzuführeinrichtung 10 am Gegenlager 5 geklemmt werden kann. Damit wird ein Vorspannen der auf dem Gegenlager 5 angeordneten Materiallagen A, B erzielt. Zudem sind vorzugsweise die klemmenden Haltekräfte ausreichend hoch, um die Spannbackenhebel 18, 19 mithilfe des Stellglieds 28 vom Stempel 4 zu entfernen, so dass das Schweißhilfsfügeteil E aus der Endposition 22 freigegeben wird. Während diese Freigabe allein über die Bewegung des Stellglieds 28 gewährleistet wird - also passiv - ist es ebenfalls bevorzugt, die Spannbacken 18, 19 aktiv zu öffnen. Dies könnte durch Eingriff eines Stellelements oder motorisch erfolgen (nicht gezeigt).

Die bewegbaren Spannbacken 18, 19 werden im Gehäuse 16 gehalten. Dieses ist bevorzugt durch eine Klappe 34 verschließbar. Die Klappe 34 verhindert eine mögliche Verschmutzung der Endposition 22 des Sacklochkanals 20 bspw. durch Schweißspritzer oder dergleichen.

Gemäß einer bevorzugten Ausführungsform vorliegender Erfindung ist die Elementzuführeinrichtung 10 an der Minus- oder Masse-Elektrode des Setz-Schweiß-Geräts 1 angeordnet. Bezugnehmend auf das Setz-Schweiß-Gerät 1 der Figur 1 liegt daher am Stempel 4 ein negatives elektrisches Potential oder Masse an, während an dem gegenüberliegenden Gegenlager 5 ein positives Potential angeschlossen ist. Bevorzugt liegt auf dem Gegenlager 5 angeschlossen an das positive elektrische Potential die aus schweißbarem Material bestehende Materiallage B auf. Durch die elektrische Polung des Gegenlagers 5 (plus) und des Stempels 4 (minus) erhält man aufgrund der Elektronenbewegung "von Minus nach Plus" - also vom Stempel 4 zum Gegenlager 5 - an diesem positiv geladenen Gegenlager 5 bevorzugt einen Elektrodenbeschuss mit Elektronen. Dieser Elektrodenbeschuss sorgt für einen lokalen Elektronenüberschuss am Gegenlager 5, der mehr joulesche Wärme freigibt, als es an der negativ gepolten Elektrode - also dem Stempel 4 - der Fall ist. Daraus resultiert eine Temperaturüberhöhung an der Plus-Elektrode, also am positiv geladenen Gegenlager 5, wo die Materiallage B aus schweißbarem Material oder mit einem Bereich aus schweißbarem Material aufliegt und eine Schweißlinse erzeugt werden soll.

Alternativ dazu aber weniger wirkungsvoll ist es ebenfalls bevorzugt, die Elementzuführeinrichtung an der Plus-Elektrode des Setz-Schweiß-Geräts anzuordnen. Bezugnehmend auf das Setz-Schweiß-Gerät liegt daher am Stempel ein positives elektrisches Potential an.

Des Weiteren ist die Elementzuführeinrichtung 10 bevorzugt mit einer eigenen Steuerung ausgestattet. Die Steuerung (nicht gezeigt) erfasst mithilfe von Sensoren und/oder den Informationen der Stellglieder 14, 28 die Position des Schweißhilfsfügeteils E in der nestartigen Endposition 22 in Bezug auf den Stempel 4 und/oder das Gegenlager 5. Zudem erfasst die Steuerung der Elementzuführeinrichtung 10 vorzugsweise eine Kraft, mit der das Schweißhilfsfügeteil E an den Stempel 4 oder das Gegenlager 5 gedrückt bzw. dort geklemmt wird. Diese Kraft ist bevorzugt aus einem Motorstrom des Stellglieds 14 ableitbar, wenn das Stellglied 14 als Schrittmotor ausgeführt ist. In gleicher Weise ist es bevorzugt, die Kraft mit Hilfe eines Kraftsensors des Setz-Schweiß-Geräts 1 zu ermitteln.

Zudem ist ein Drehwinkel eines Schrittmotors eines Stellglieds 14, 28 auswertbar, um den absoluten Stellweg des Stellglieds 14, 28 zu bestimmen. Aus den erfassten elektrischen Informationen der Stellglieder 14, 28 kann somit bevorzugt die Steuerung der Elementzuführeinrichtung 10 die absolute Position und Anlagekraft des Schweißhilfsfügeteils E bspw. am Stempel 4 oder am Gegenlager 5 bestimmen. Umgekehrt ist es der Steuerung bevorzugt ebenfalls möglich, eine genaue Position und/oder eine Anlagekraft des Schweißhilfsfügeteils E vorzugeben.

Gemäß einer bevorzugten Ausführungsform vorliegender Erfindung ist die Steuerung der Elementzuführeinrichtung 10 als Master ausgestaltet. Entsprechend gibt die Steuerung der Elementzuführeinrichtung 10 der Zentralsteuerung des Setz-Schweiß-Geräts 1 vor, wann das Schweißhilfsfügeteil E passend positioniert ist und ein Verbindungsvorgang starten kann. Es ist natürlich ebenfalls bevorzugt, die Steuerung der Elementzuführeinrichtung 10 in die Zentralsteuerung zu integrieren, um apperativen Aufwand zu reduzieren. Ist die Elementzuführeinrichtung 10 aber als Modul ausgestaltet, ist die moduleigene Steuerung wesentlich für den Betrieb der Elementzuführeinrichtung 10 in Kombination mit dem Setz-Schweiß-Geräts 1.

Basierend auf der oben beschriebenen Konstruktion ist die Elementzuführeinrichtung 10 unabhängig vom Setz-Schweiß-Gerät 1 oder in Abstimmung mit dessen Steuerung parallel zur Bewegungslinie B₁, also in Elektrodenhubrichtung, verfahrbar. Auf diese Weise sind Ausgangspositionen, Partialhübe und unterschiedliche Arbeitspositionen der Elementzuführeinrichtung 10 und im Speziellen des Schweißhilfsfügeteils E in der Endposition 22 flexibel einstellbar und in der Steuerung programmierbar. Wurde eine oder wurden beide Schweißkappen oder Elektrodenkappen K₄, K₅ nach mehreren Schweißvorgängen zur Schaffung einer prozesssicheren Oberfläche in bekannter Weise abgefräst, werden bevorzugt geänderte Anfahrpositionen des Schweißhilfsfügeteils E befindlich in der Endposition 22 korrigiert und durch die Steuerung der Elementzuführeinrichtung 10 vorgegeben. Gemäß einer bevorzugten Ausführungsform ist in der Steuerung hinterlegt, um welchen Absolutbetrag sich die Anfahrpositionen mit einem Abfräsvorgang der Elektrodenkappen K₄, K₅ verändern. Entsprechend greift die Steuerung auf diese Informationen zu, wenn sie über einen abgeschlossenen Abfräsvorgang informiert worden ist. Es ist ebenfalls bevorzugt, dass die Zentralsteuerung des Setz-Schweiß-Geräts 1 diese Informationen an die Steuerung der Elementzuführeinrichtung 10 übermittelt. Gemäß einer weiteren Ausführungsform ist es bevorzugt, dass die Elementzuführeinrichtung 10 die abgefrästen Elektrodenkappen K₄, K₅ anfährt, um die neue Anfahrposition oder Endposition der Elektrodenkappen K₄, K₅ zu erfassen.

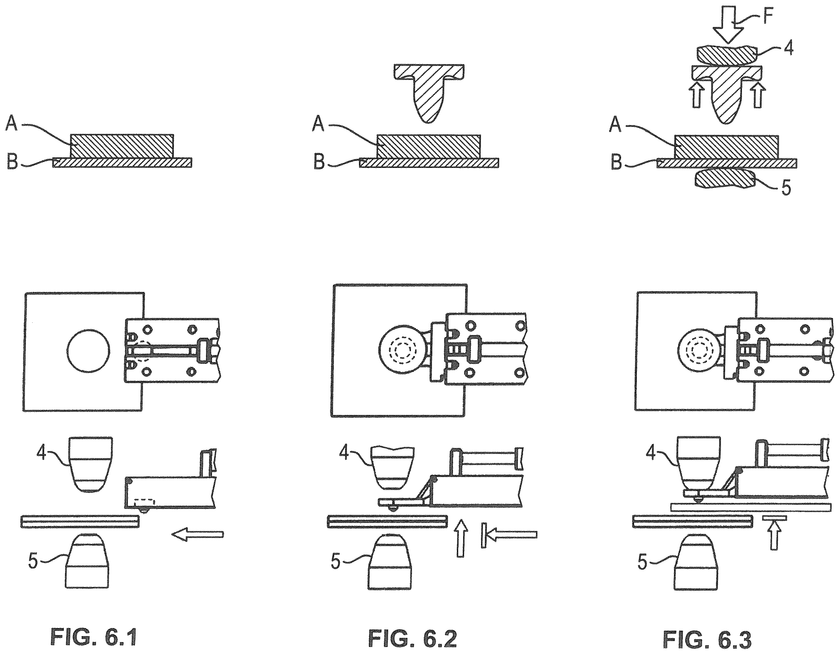

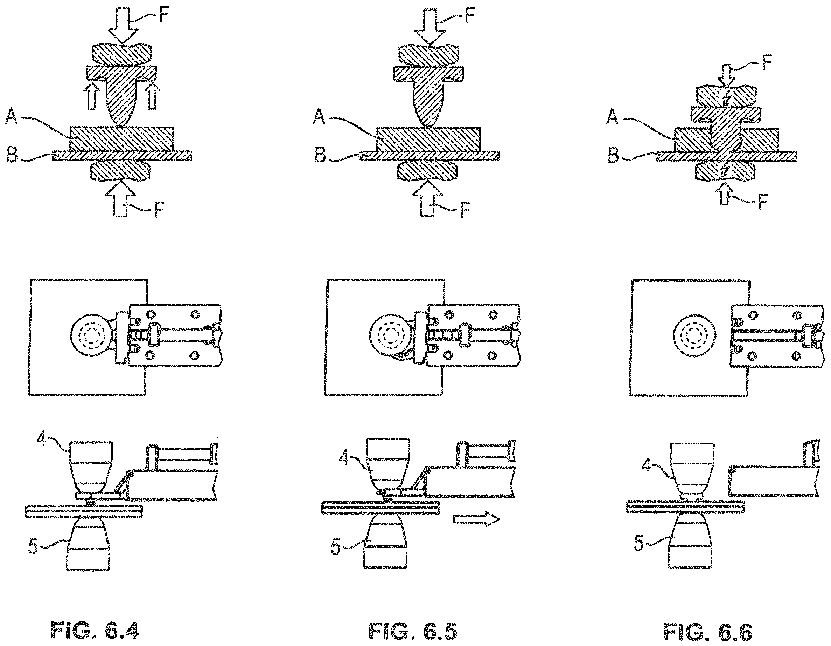

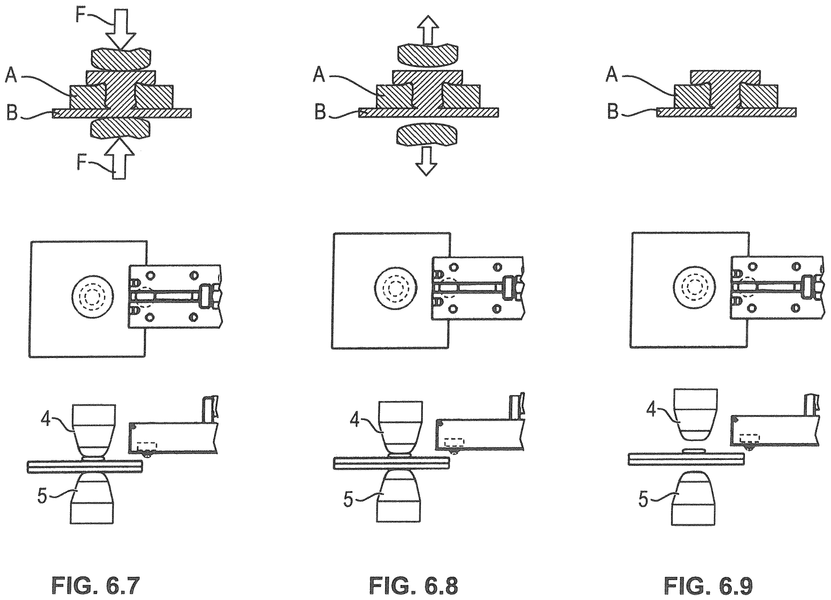

Bezugnehmend auf die Figur 6 wird nun das Verbindungsverfahren mit integrierter Zufuhr des Schweißhilfsfügeteils E beschrieben. Zunächst wird gemäß Figur 6.1 das Schweißhilfsfügeteil E der Endposition 22 zugeführt (Schritt S1). Figur 6.1 zeigt dazu die Materiallagen A, B ohne ein darüber angeordnetes Schweißhilfsfügeteil E. Die Endposition 22 der Elementzuführeinrichtung 10 ist noch nicht zwischen Stempel 4 und Gegenlager 5 angeordnet.

Das Stellglied 28 bewegt nun das Schweißhilfsfügeteil E unter den Stempel 4 (Schritt S2). Der Stempel 4 bildet eine Elektrode im späteren Schweißprozess, vorzugsweise die negative oder Masse-Elektrode. Zu diesem Zweck wird die Klappe 34 geöffnet und die Spannbackenhebel 18,19 bewegen das Schweißhilfsfügeteil E unter den Stempel 4, vorzugsweise auf die Bewegungslinie B₁. Gleichzeitig wird bevorzugt mit dieser Bewegung der Spannbackenhebel 19 entsperrt, um das Schweißhilfsfügeteil E später freigeben zu können. Alternativ aber weniger wirkungsvoll ist es ebenfalls bevorzugt, den Stempel 4 mit der Plus-Elektrode und das Gegenlager 5 mit Masse oder Minus zu verbinden.

Im nächsten Schritt (S3, siehe Fig. 6.3) verfährt die Elementzuführeinrichtung 10 durch das Stellglied 14 entgegen der Fügerichtung R_{F}, bis das Schweißhilfsfügeteil E mit seinem Kopf am Elektrodenstempel 4 anliegt. Dies erfolgt bevorzugt weggesteuert auf fest vorgegebenen Wegpunkten. In Abhängigkeit von den vorher durchgeführten Fräsvorgängen an den Kappen K₄, K₅ werden die Wegpunkte angepasst. Es ist des Weiteren bevorzugt, die Position des Schweißhilfsfügeelements E kraftgesteuert über einen Stromschwellwert im servomotorischen Antrieb des Stellglieds 14 der Elementzuführeinrichtung 10 anzufahren. Eine weitere bevorzugte Ausführungsform besteht darin, den Stempel 4 über den Antrieb 2 dem auf der Bewegungslinie B₁ positionierten Schweißhilfsfügeelement E zuzustellen. Eine ausreichende Anlage zwischen Schweißhilfsfügeelement E und Stempel 4 ist anhand eines Kraftsensors im Setz-Schweiß-Gerät 1 oder anhand eines erfassten Stromwerts des Antriebs 2 des Setz-Schweiß-Geräts 1 erkennbar. Zudem ist es bevorzugt, eine überlagerte Kraft-/Wegsteuerung zu nutzen. Diese erlaubt zusätzlich eine Kontrolle, ob das Schweißhilfsfügeelement E tatsächlich zwischen Stempel 4 und Gegenlager 5 positioniert worden ist und vorzugsweise welche Länge es aufweist. Zudem ist es bevorzugt, die oben beschriebenen Schritte S2 und S3 mithilfe einer überlagerten Horizontal-Vertikal-Bewegung der Stellglieder 14, 28 zu realisieren. Entsprechend könnte sich das Schweißhilfsfügeteil E positioniert in der Endposition 22 auch über einen krummlinigen Weg in Anlage zum Stempel 4 bewegen.

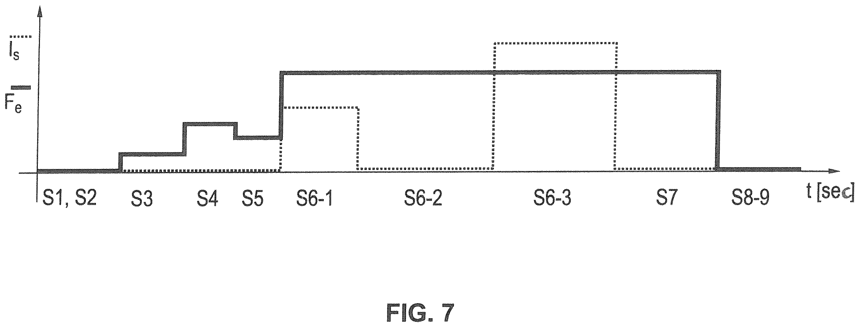

Figur 7 beschreibt die bevorzugt während des Verbindungsverfahrens wirkenden mechanischen und elektrischen Lasten. Dabei bezeichnet F die Kraft am Stempel 4. Oberhalb eines Abschnitts der Kraft-Kurve (durchgezogene Linie in Fig. 7) und der Strom-Kurve (gestrichelte Linie in Fig. 7) ist jeweils der Schritt S des Verbindungsverfahrens angegeben. Wenn daher im Schritt S3 das Schweißhilfsfügeteil E gegen den Stempel 4 versetzt wird, ist dies als Kraftwert erfassbar (siehe auch Fig. 6.3).

Nachdem das Schweißhilfsfügeteil E am Stempel 4 positioniert worden ist, sendet bevorzugt die Steuerung der Elementzuführeinrichtung 10 als Master ein passendes Signal an die Zentralsteuerung (Slave) des Setz-Schweiß-Geräts 1, dass der Stempel 4 gemeinsam mit dem anliegenden Schweißhilfsfügeteil E in Fügerichtung R_{F} versetzt werden soll. Da vorzugsweise die Elementzuführeinrichtung 10 stempelseitig am Setz-Schweiß-Gerät 1 befestigt ist, verfährt die Elementzuführeinrichtung 10 gemeinsam mit dem Stempel 4. Es ist ebenfalls bevorzugt, das Stellglied 14 gemeinsam mit der Verfahrbewegung des Stempels 4 und seines Antriebs 2 zu verlängern.

Nach Eingang des oben genannten Signals in der bevorzugten Slave-Steuerung fährt das Setz-Schweiß-Gerät 1 soweit den Stempel 4 in Richtung Gegenlager 5, bis das Schweißhilfsfügeteil E mit seiner dem Kopf abgewandten Seite auf dem decklagigen Fügepartner, also die Materiallage A, aufsetzt. Des Weiteren wird der Verfahrweg des Stempels 4 dadurch begrenzt, dass eine voreingestellte Klemmkraft des Stempels 4 erzielt wird, mit dem das Schweißhilfsfügeteil E auf die Materiallage A zwischen dem Stempel 4 und dem Gegenlager 5 gedrückt wird (siehe Schritt S4). Die Steuerung zum Erreichen dieser Klemmposition des Schweißhilfsfügeteils erfolgt gemäß einer bevorzugten Ausführungsform weggesteuert oder gemäß einer weiteren bevorzugten Ausführungsform kraft- und weggesteuert. Auf diese Weise kann überwacht werden, ob ein Schweißhilfsfügeteil E vorhanden ist, welche Länge das Schweißhilfsfügeteil aufweist, ob die gewünschte Materiallage A vorhanden ist und/oder wie deren Dicke bei Erkenntnis der Länge des Schweißhilfsfügeteils E ausfällt. Es ist natürlich ebenfalls bevorzugt, nur eine Auswahl der eben genannten Parameter zu überprüfen. Bezugnehmend auf Figur 7 ist hervorzuheben, dass entsprechend dem obigen Vorgehen die Kraft F im Schritt S4 ansteigt, um die entsprechende Klemmung des Schweißhilfsfügeteils zu realisieren.

Nachdem die Klemmung der Materiallagen A, B zwischen dem Stempel 4, dem Schweißhilfsfügeteil E und dem Gegenlager 5 erzielt und erfasst worden ist, sendet die Zentralsteuerung des Setz-Schweiß-Geräts 1 ein entsprechendes Signal an die Steuerung der Elementzuführeinrichtung 10. Es ist ebenfalls bevorzugt, dass im Rahmen der Klemmung die Spitze des Schweißhilfsfügeteils E in die der Spitze zugewandte Materiallage A prägend eingedrückt wird. Dies stabilisiert das geklemmte Schweißhilfsfügeteil E und wirkt sich bevorzugt nicht nachteilig auf die spätere Verbindung aus.

Daraufhin wird im Schritt S5 die Elementzuführeinrichtung 10 entlastet und das Schweißhilfsfügeteil E freigegeben. Zum Freigeben werden die Spannbackenhebel 18,19 geöffnet (siehe oben) oder einfach vom geklemmten Schweißhilfsfügeteil E abgezogen (siehe Fig. 6.5). Entsprechend sind bevorzugt leicht die Kraft im Schritt S5 (siehe Fig. 7). Nachdem die Spannbackenhebel 18, 19 in das Gehäuse 16 eingefahren worden sind, kann eine neue Beladung der Endposition 22 erfolgen.

Nach Eingang des Signals, dass das Schweißhilfsfügeteil E seine geklemmte Ausgangsposition erreicht hat, wird durch die Zentralsteuerung der mechanische Eintreibvorgang des Schweißhilfsfügeteils E in die Materiallage A gestartet. Dieser Schritt S6 - 1 ist vorzugsweise durch einen elektrischen Stromfluss unterstützt, wie man in Figur 7 erkennen kann. Der elektrische Stromfluss reduziert vorzugsweise die Härte der Materiallage A in Folge von Materialerwärmung, während das Schweißhilfsfügeteil E bis zur Materiallage B getrieben wird.

Zur Abkühlung des Schweißhilfsfügeteils E sowie der Materiallagen A, B werden bevorzugt zeit- und/oder weggesteuert stromfreie Phasen eingeleitet, wie Figur 7 zeigt (siehe S6 - 2). Danach erfolgt im Schritt S6 - 3 das Verschweißen der Materiallage B mit dem Schweißhilfsfügeteil E. Die zeitliche Dauer des Schweißvorgangs wird bevorzugt durch eine Zeitspanne festgelegt. Gemäß einer weiteren bevorzugten Ausführungsform vorliegender Erfindung wird der Weg des Stempels 4 während des Schweißens erfasst. Überschreitet dieser einen Schwellensinkweg des Schweißhilfsfügeteils E und somit des Stempels 4, dann wird der Schweißvorgang beendet.

Nachfolgend kühlt im Schritt S7 die Verbindung stromlos ab, wobei die Fügestelle weiter zwischen Stempel 4 und Gegenlager 5 mechanisch verspannt wird. Anschließend werden im Schritt S8 - 9 der Stempel 4 und das Gegenlager 5 entlastet und die Verbindung entfernt, wie in den Figuren 6.8 und 6.9 gezeigt ist.

Alternativ zur oben beschriebenen Ausgestaltung des Schweißhilfsfügeteils E weißt das Schweißhilfsfügeteil E' (nicht gezeigt) an seinem Kopf bevorzugt ein Funktionsende auf, welches abgewandt vom Schaft des Schweißhilfsfügeteils E' vorsteht. Das Funktionsende umfasst eine Befestigungsstruktur, wie bspw. einen Gewindesteg, eine Gewindehülse, einen Kugelkopf oder eine Raststruktur, oder ein Gestaltungselement. Das Funktionsende ist bezogen auf die Längsachse des Schweißhilfsfügeteils E' koaxial zum Schaft angeordnet. Vorzugsweise erstreckt sich ein ringartig umlaufender radialer Vorsprung im Übergangsbereich zwischen Schaft und Funktionsende. Der ringartig umlaufende radiale Vorsprung bildet einen Hinterschnitt quer zur Fügerichtung R_{F}. und übernimmt die Funktionalität des Kopfes des oben beschriebenen Schweißhilfsfügeteils E. Vorzugsweise weist der Stempel 4' (nicht gezeigt) in Anpassung an das Schweißhilfsfügeteil E' eine zentrale Öffnung mit einer ringartigen Anlageoder Druckfläche auf. Sobald die Elementzufuhr in oben beschriebener Weise das Schweißhilfsfügeteil E' in Anlage an den Stempel 4' versetzt, wird das Funktionsende des Schweißhilfsfügeteils E' in der zentralen Öffnung des Stempels 4' aufgenommen, bis die ringartige Anlagefläche am ringartig umlaufenden radialen Vorsprung des Schweißhilfsfügeteils E' anliegt. Wird das Schweißhilfsfügeteil E' mit Hilfe des Stempels 4' gefügt und/oder verschweißt, werden mechanische und/oder elektrische Lasten über die ringartige Anlagefläche und den ringartig umlaufenden radialen Vorsprung vom Stempel 4' auf das Schweißhilfsfügeteil E' und die zu verbindenden Bauteile übertragen. Die Zufuhr des Schweißhilfsfügeteils E' und das Herstellen einer Verbindung verläuft trotz der konstruktiven Unterschiede von Stempel 4' und Schweißhilfsfügeteil E' mit Funktionsende in gleicher Weise, wie es oben beschrieben worden ist.

### Bezugszeichenliste

- 1: Setz-Schweiß-Gerät
- 2: Antriebseinheit
- 3: C-Bügel
- 4; 4': Stempel
- 5: Gegenlager
- 6: elektrische Versorgungseinheit/ Schweißmodul
- 10: Elementzuführeinheit
- 12: Profilschlauch
- 14: Stellglied
- 16: Gehäuse
- 18,19: Spannbackenhebel
- 20: Sacklochkanal
- 22: nestartige Endposition
- 24: Brücke
- 26: Schenkelfeder
- 28: Stellglied
- 30: Einlaufbahn
- 32: Sperrklinke
- 34: Klappe
- B₁: erste Bewegungslinie
- R_{F}: Fügerichtung
- E; E': Schweißhilfsfügeteil
- K₄, K₅: Schweißkappen

## Patentansprüche

1. Elementzuführeinrichtung (10) eines Setz-Schweiß-Geräts (1) für ein bolzenähnliches Schweißhilfsfügeteil (E) mit Kopf und Schaft, in dem von einem Elektrodenstempel (4) und einem Elektrodengegenlager (5) zur Herstellung einer Setz-Schweiß-Verbindung eine relative Fügebewegung entlang einer ersten geraden Bewegungslinie (B1) durchführbar ist, wobei die Elementzuführeinrichtung (10) folgende Merkmale aufweist:
a. zwei scherenartig angeordnete Spannbackenhebel (18, 19), von denen mindestens ein Spannbackenhebel (19) schwenkbar angeordnet ist und beide Spannbackenhebel (18, 19) gemeinsam einen temporär einseitig verschließbaren Sacklochkanal (20) mit einer nestartigen Endposition (22) bilden, in welchem ein Schweißhilfsfügeteil (E) an der Endposition aufnehmbar ist, und die Elementzuführeinrichtung (10) ist **dadurch gekennzeichnet, dass** sie weiterhin umfasst:
b. ein erstes Stellglied (28), mit dem der Sacklochkanal (20) entlang einer anderen als der ersten Bewegungslinie (B1) bewegbar ist, so dass die nestartige Endposition (22) des Sacklochkanals (20) zwischen dem Elektrodenstempel (4) und dem Elektrodengegenlager (5) positionierbar ist, und
c. ein zweites Stellglied (14), mit dem der Sacklochkanal (20) parallel zur ersten Bewegungslinie (B1) kraft- und/oder weggesteuert bewegbar ist, so dass ein an der nestartigen Endposition (22) des Sacklochkanals (20) gehaltenes Schweißhilfsfügeteil (E) in einem Festsitz angreifend an dem Elektrodenstempel (4) positionierbar ist.

2. Elementzuführeinrichtung (10) gemäß Anspruch 1, in der das erste Stellglied (28) ein lineares Stellglied umfasst, mit dem die Endposition (22) des Sacklochkanals (20) senkrecht zur ersten Bewegungslinie (B1) linear bewegbar ist.

3. Elementzuführeinrichtung (10) gemäß einem der vorhergehenden Ansprüche, in der der Sacklochkanal (20) eine schwenkbare und nur in Richtung der Endposition durch ein Schweißhilfsfügeteil (E) überwindbare Sperrklinke (32) aufweist.

4. Elementzuführeinrichtung (10) gemäß einem der vorhergehenden Ansprüche, in der die Spannbackenhebel (18, 19) den Sacklochkanal (20) an einer Innenseite nutartig ausgestalten, so dass ein Kopf eines Schweißhilfsfügeteils (E) darin führbar und bewegbar formschlüssig gehalten ist.

5. Elementzuführeinrichtung (10) gemäß einem der vorhergehenden Ansprüche, die eine Steuereinheit umfasst, mit der erfasste Betriebsdaten der Elementzuführeinrichtung (10) auswertbar und mindestens ein Befehl für zumindest eine verbundene Komponente, vorzugsweise eine Zentralsteuerung eines Setz-Schweiß-Geräts (1), erzeugbar und an diese übermittelbar ist.

6. Ein Setz-Schweiß-Gerät (1) für ein Schweißhilfsfügeteil (E), das einen Elektrodenstempel (4) und ein Elektrodengegenlager (5) aufweist, mit denen eine relative Fügebewegung entlang einer ersten geraden Bewegungslinie (B1) durchführbar ist, um eine Setz-Schweiß-Verbindung herzustellen, und das eine Elementzuführeinrichtung (10) gemäß einem der vorhergehenden Ansprüche aufweist.

7. Setz-Schweiß-Gerät (1) gemäß Anspruch 6, in dem die Elementzuführvorrichtung (10) derart am Setz-Schweiß-Gerät (1) befestigt ist, dass sie bei einer Stempelbewegung gemeinsam mit dem Stempel (4) verfahrbar ist.

8. Setz-Schweiß-Gerät (1) gemäß Anspruch 6 oder 7, das eine Zentralsteuerung aufweist, die vorzugsweise als Slave-Komponente mit einer als Master-Komponente konfigurierten Steuereinheit der Elementzuführeinrichtung (10) Daten und/oder Befehle austauscht.

9. Setz-Schweiß-Gerät (1) gemäß Anspruch 6, 7 oder 8, in dem der Elektrodenstempel (4) mit einem negativen elektrischen Potential und das Elektrodengegenlager (5) mit einem positiven elektrischen Potential verbunden sind, um einen Schweißprozess zu unterstützen.

10. Ein Verbindungsverfahren in Form eines mechanisch-thermischen Setz-Schweiß-Prozesses mithilfe eines bolzenähnlichen Schweißhilfsfügeteils (E) für mindestens eine erste Materiallage ohne Vorlochen der mindestens einen ersten Materiallage mit mindestens einer zweiten Materiallage aus schweißbarem Material oder mit einem Abschnitt aus schweißbarem Material, wobei das Schweißhilfsfügeteil (E) mithilfe einer Elementzuführeinrichtung (10) gemäß einem der Ansprüche 1 bis 5 während des Verbindungsverfahrens zugeführt und gehalten wird, dass die folgenden Schritte aufweist:
a. Positionieren der mindestens einen ersten und der mindestens einen zweiten Materiallage zwischen einem Elektrodenstempel (4) und einem Elektrodengegenlager (5), zwischen denen eine relative Fügebewegung entlang einer ersten geraden Bewegungslinie (B1) durchführbar ist, **gekennzeichnet durch** die Schritte:
b. Positionieren des Schweißhilfsfügeteils (E) zwischen dem Elektrodenstempel (4) und dem Elektrodengegenlager (5),
c. Bewegen des Schweißhilfsfügeteils (E) kraftgesteuert- und/oder weggesteuert in Anlage mit dem Elektrodenstempel (4),
d. anschließend an Schritt c. gemeinsames Bewegen von Elektrodenstempel (4) und Schweißhilfsfügeteil (E) bis zur Anlage an den Materiallagen, die sich am Elektrodengegenlager (5) abstützen, und dadurch mechanisches Vorspannen der Materiallagen und
e. Verbinden des Schweißhilfsfügeteils (E) und der Materiallagen mithilfe mechanischer und/oder thermischer Lasten.

11. Verbindungsverfahren gemäß Anspruch 10, in dem das Schweißhilfsfügeteil (E) im Festsitz, bevorzugt mit mindestens einer Sollkraft vorgespannt, in Anlage am Elektrodenstempel (4) gehalten wird.

12. Verbindungsverfahren gemäß Anspruch 10 oder 11, in dem die Materiallagen über den Stempel (4) und das Schweißhilfsfügeteil (E) ohne die Verwendung eines Niederhalters vorgespannt werden.

13. Verbindungsverfahren gemäß einem der Ansprüche 10 bis 12, mit dem weiteren Schritt:
Freigeben des Schweißhilfsfügeteils (E) durch die Elementzuführeinrichtung (10), nachdem das Schweißhilfsfügeteil (E) und die Materiallagen zwischen dem Elektrodenstempel (4) und der Elektrodenmatrize (5) vorgespannt worden sind.

14. Verbindungsverfahren gemäß einem der Ansprüche 10 bis 13, mit dem weiteren Schritt:
Erfassen einer durch das Schweißhilfsfügeteil (E) auf den Elektrodenstempel (4) aufgebrachten Kraft mittels eines Kraftsensors und/oder Erfassen eines mittels einer Elementzuführeinrichtung (10) zurückgelegten Wegs des Schweißhilfsfügeteils (E) in Richtung des Elektrodenstempels (4).

15. Verbindungsverfahren gemäß Anspruch 14, mit dem weiteren Schritt:
Übermitteln der erfassten Kraft und/oder des erfassten Wegs an eine Steuereinheit und
Starten eines Zustellens des Schweißhilfsfügeteils (E) mit dem Elektrodenstempel (4) in Richtung des Elektrodengegenlagers (5) nach Erreichen einer Sollkraft und/oder eines Sollwerts.

16. Verbindungsverfahren gemäß Anspruch 15, in dem die erfasste Kraft und/oder der erfasste Weg an eine Steuereinheit der Elementzuführeinrichtung (10) übermittelt wird und die Steuereinheit der Elementzuführeinrichtung (10) daraufhin einer Zentralsteuerung des Setz-Schweiß-Geräts (1) gestattet, das Verbindungsverfahren fortzusetzen, oder vorgibt, das Verbindungsverfahren mit einem bestimmten Schritt fortzusetzen.

17. Verbindungsverfahren gemäß einem der Ansprüche 10 bis 16, mit dem weiteren Schritt:
Einpressen und Verschweißen des Schweißhilfsfügeteils (E) in den Materiallagen,
vorzugsweise Stauchen und Verspannen der Verbindung aus Materiallagen und Schweißhilfsfügeteil (E) durch Aufbringen einer Kraft mit dem Elektrodenstempel (4), und
Lösen des Elektrodenstempels (4) und des Elektrodengegenlagers (5) von den verbundenen Materiallagen.

## Claims

1. Element supply device (10) of a setting welding device (1) for a bolt-like welding auxiliary joining part (E) having a head and a shaft, in which a relative joining movement along a first straight movement line (B 1) can be performed by an electrode punch (4) and electrode counter bearing (5) for producing a setting welding connection, wherein the element supply device (10) has the following features:
a. two scissor-like arranged clamping jaw levers (18, 19), at least one clamping jaw lever (19) of which is arranged pivotably and both clamping jaw levers (18, 19) form together a blind hole channel (20) which can be closed temporarily on one side having a nest-like end position (22), in which a welding auxiliary joining part (E) can be received at the end position, and the element supply device (10) is **characterized in that** it furthermore comprises:
b. a first actuator (28) by means of which the blind hole channel (20) is movable along another than the first movement line (B1) so that the nest-like end position (22) of the blind hole channel (20) is positionable between the electrode punch (4) and the electrode counter bearing (5), and
c. a second actuator (14) by means of which the blind hole channel (20) is movable parallel to the first movement line (B1) in a force- and/or distance-controlled manner so that a welding auxiliary joining part (E) held at the nest-like end position (22) of the blind hole channel (20) is positionable in a force fit abutting at the electrode punch (4).

2. Element supply device (10) according to claim 1, in which the first actuator (28) comprises a linear actuator by means of which the end position (22) of the blind hole channel (20) is movable linearly perpendicular to the first movement line (B1).

3. Element supply device (10) according to one of the preceding claims, in which the blind hole channel (20) comprises a detent (32) which is pivotable and conquerable by a welding auxiliary joining part (E) only in the direction of the end position.

4. Element supply device (10) according to one of the preceding claims, in which the clamping jaw levers (18, 19) form the blind hole channel (20) groove-like at an inner side so that a head of a welding auxiliary joining part (E) is guidable therein and is holdable movable therein in a form-fit manner.

5. Element supply device (10) according to one of the preceding claims, which comprises a control unit by means of which captured operating data of the element supply device (10) can be evaluated and at least one command for at least one connected component, preferably a central control of a setting welding device (1), can be created and transmitted to same.

6. A setting welding device (1) for a welding auxiliary joining part (E) comprising an electrode punch (4) and an electrode counter bearing (5) by means of which a relative joining movement can be performed along a first straight movement line (B 1) to produce a setting welding connection and which comprises an element supply device (10) according to one of the preceding claims.

7. Setting welding device (1) according to claim 6, in which the element supply device (10) is fastened at the setting welding device (1) such that it is movable together with the punch (4) during a punch movement.

8. Setting welding device (1) according to claim 6 or 7, comprising a central control exchanging data and/or commands preferably as slave component with a control unit of the element supply device (10) configured as master component.

9. Setting welding device (1) according to claim 6, 7 or 8, in which the electrode punch (4) is connected to a negative electric potential and the electrode counter bearing (5) is connected to a positive electric potential to support a welding process.

10. A connection method in the form of a mechanical thermal setting welding process by means of a bolt-like welding auxiliary joining part (E) for at least one first material layer without pre-punching of the at least one first material layer with at least one second material layer of weldable material or with a section of weldable material, wherein the welding auxiliary joining part (E) is supplied and retained by means of an element supply device (10) according to one of the claims 1 to 5 during the connection method, comprising the following steps:
a. positioning the at least one first and the at least one second material layer between an electrode punch (4) and an electrode counter bearing (5), between which a relative joining movement along a first straight movement line (B1) can be performed, **characterized by** the steps:
b. positioning the welding auxiliary joining part (E) between the electrode punch (4) and the electrode counter bearing (5),
c. moving the welding auxiliary joining part (E) into abutment with the electrode punch (4) in a force-controlled and/or distance-controlled manner,
d. subsequently to step c., jointly moving electrode punch (4) and welding auxiliary joining part (E) until abutment at the material layers which are supported at the electrode counter bearing (5), and thereby mechanical pre-tensioning of the material layers, and
e. connecting the welding auxiliary joining part (E) and the material layers by means of mechanical and/or thermal loads.

11. Connection method according to claim 10, wherein the welding auxiliary joining part (E) is held in force fit, preferably with at least a predetermined force, in abutment at the electrode punch (4).

12. Connection method according to claim 10 or 11, wherein the material layers are pretensioned by the punch (4) and the welding auxiliary joining part (E) without the usage of a down-holder.

13. Connection method according to one of the claims 10 to 12, comprising the further step:
releasing the welding auxiliary joining part (E) by the element supply device (10) after the welding auxiliary joining part (E) and the material layers between the electrode punch (4) and the electrode die (5) have been pre-tensioned.

14. Connection method according to one of the claims 10 to 13, comprising the further step:
capturing a force applied by the welding auxiliary joining part (E) to the electrode punch (4) by means of a force-sensor and/or capturing a distance of the welding auxiliary joining part (E) in the direction of the electrode punch (4) covered by means of an element supply device (10).

15. Connection method according to claim 14, comprising the further step:
transmitting the captured force and/or the captured distance to a control unit and
starting of an advancing of the welding auxiliary joining part (E) with the electrode punch (4) in the direction of the electrode counter bearing (5) after reaching a required force and/or a required value.

16. Connection method according to claim 15, wherein the captured force and/or the captured distance is transmitted to a control unit of the element supply device (10) and the control unit of the element supply device (10) allows a central control of the setting welding device (1) as a result to continue with the connection method or determines that the connection method be continued with a specific step.

17. Connection method according to one of the claims 10 to 16, comprising the further step:
pressing in and welding of the welding auxiliary joining part (E) in the material layers,
preferably compressing and bracing the connection of material layers and welding auxiliary joining part (E) by applying a force with the electrode punch (4), and
releasing the electrode punch (4) and the electrode counter bearing (5) from the connected material layers.

## Revendications

1. Dispositif d'alimentation en éléments (10) d'un appareil de placement et de soudage (1) pour une pièce de jonction auxiliaire de soudage (E) du genre boulon avec une tête et une tige, dans lequel un mouvement de jonction relatif le long d'une première trajectoire droite (B1) peut être effectué par un tampon d'électrode (4) et une butée d'électrode (5) pour la réalisation d'un assemblage par placement et soudage, dans lequel le dispositif d'alimentation en éléments (10) présente les caractéristiques suivantes :
a. deux leviers de mâchoire de serrage (18, 19) disposés comme une pince, dont au moins un levier de mâchoire de serrage (19) est disposé de façon pivotante et les deux leviers de mâchoire de serrage (18, 19) forment conjointement un canal à trou borgne (20), lequel peut être fermé temporairement sur un côté, avec une position finale semblable à un nid (22), dans lequel une pièce de jonction auxiliaire de soudage (E) peut être reçue au niveau de la position finale, et le dispositif d'alimentation en éléments (10) est **caractérisé en ce qu'**il comprend en outre :
b. un premier organe de positionnement (28) permettant de déplacer le canal à trou borgne (20) le long d'une ligne différente de la première trajectoire (B1), de manière à pouvoir positionner la position finale semblable à un nid (22) du canal à trou borgne (20) entre le tampon d'électrode (4) et la butée d'électrode (5), et
c. un deuxième organe de positionnement (14) permettant de déplacer le canal à trou borgne (20) parallèlement à la première trajectoire (B1) de façon commandée en termes de force et/ou de distance, de manière à pouvoir positionner une pièce de j onction auxiliaire de soudage (E) maintenue au niveau de la position finale semblable à un nid (22) du canal à trou borgne (20) en ajustement serré en prise sur le tampon d'électrode (4).

2. Dispositif d'alimentation en éléments (10) selon la revendication 1, dans lequel le premier organe de positionnement (28) comporte un organe de positionnement linéaire permettant de déplacer la position finale (22) du canal à trou borgne (20) de façon linéaire perpendiculairement à la première trajectoire (B1).

3. Dispositif d'alimentation en éléments (10) selon l'une des revendications précédentes, dans lequel le canal à trou borgne (20) présente un cliquet (32) pivotant et susceptible d'être surmonté uniquement en direction de la position finale par une pièce de jonction auxiliaire de soudage (E).

4. Dispositif d'alimentation en éléments (10) selon l'une des revendications précédentes, dans lequel les leviers de mâchoire de serrage (18, 19) configurent le canal à trou borgne (20) sous forme de gorge sur un côté intérieur, de sorte qu'une tête d'une pièce de jonction auxiliaire de soudage (E) peut être guidée et maintenue par complémentarité de forme de façon déplaçable dans celui-ci.

5. Dispositif d'alimentation en éléments (10) selon l'une des revendications précédentes, lequel comporte une unité de commande permettant d'évaluer des données de fonctionnement détectées du dispositif d'alimentation en éléments (10) et de générer au moins une instruction destinée à au moins un composant relié, de préférence une commande centrale d'un appareil de placement et de soudage (1), et de la transmettre à celui-ci.

6. Appareil de placement et de soudage (1) pour une pièce de jonction auxiliaire de soudage (E), présentant un tampon d'électrode (4) et une butée d'électrode (5) permettant d'effectuer un mouvement de jonction relatif le long d'une première trajectoire droite (B1), afin de réaliser un assemblage par placement et soudage, et présentant un dispositif d'alimentation en éléments (10) selon l'une des revendications précédentes.

7. Appareil de placement et de soudage (1) selon la revendication 6, dans lequel le dispositif d'alimentation en éléments (10) est fixé de telle façon à l'appareil de placement et de soudage (1), qu'il peut être déplacé conjointement avec le tampon (4) lors d'un déplacement du tampon.

8. Appareil de placement et de soudage (1) selon la revendication 6 ou 7, présentant une commande centrale, laquelle échange de préférence des données et/ou des instructions en tant que composant esclave avec une unité de commande du dispositif d' alimentation en éléments (10) configurée comme un composant maître.

9. Appareil de placement et de soudage (1) selon la revendication 6, 7 ou 8, dans lequel le tampon d'électrode (4) est relié à un potentiel électrique négatif et la butée d'électrode (5) est reliée à un potentiel électrique positif, afin de faciliter un processus de soudage.

10. Procédé d'assemblage sous la forme d'un processus de placement et de soudage mécano-thermique à l'aide d'une pièce de jonction auxiliaire de soudage (E) semblable à un boulon pour au moins une première couche de matériau sans pré-perçages de l'au moins une première couche de matériau avec au moins une deuxième couche de matériau constituée d'un matériau soudable ou comprenant une section de matériau soudable, dans lequel la pièce de jonction auxiliaire de soudage (E) est alimentée et maintenue à l'aide d'un dispositif d'alimentation en éléments (10) selon l'une des revendications 1 à 5 pendant le procédé d'assemblage, lequel présente les étapes suivantes :
a. positionnement de l'au moins une première et de l'au moins une deuxième couche de matériau entre un tampon d'électrode (4) et une butée d'électrode (5), entre lesquels un mouvement de jonction relatif le long d'une première trajectoire droite (B 1) peut être effectué, **caractérisé par** les étapes suivantes :
b. positionnement de la pièce de j onction auxiliaire de soudage (E) entre le tampon d'électrode (4) et la butée d'électrode (5),
c. déplacement de la pièce de jonction auxiliaire de soudage (E) de façon commandée en termes de force et/ou de distance en contact avec le tampon d'électrode (4),
d. après l'étape c, déplacement conjoint du tampon d'électrode (4) et de la pièce de jonction auxiliaire de soudage (E) jusqu'à l'entrée en contact avec les couches de matériau en appui sur la butée d'électrode (5), et par conséquent précontrainte mécanique des couches de matériau et
e. assemblage de la pièce de jonction auxiliaire de soudage (E) et des couches de matériau à l'aide de charges mécaniques et/ou thermiques.

11. Procédé d'assemblage selon la revendication 10, dans lequel la pièce de jonction auxiliaire de soudage (E) en ajustement serré, de préférence précontrainte par au moins une force de consigne, est maintenue en contact sur le tampon d'électrode (4).

12. Procédé d'assemblage selon la revendication 10 ou 11, dans lequel les couches de matériau sont précontraintes par le biais du tampon (4) et de la pièce de jonction auxiliaire de soudage (E) sans l'utilisation d'un serre-flanc.

13. Procédé d'assemblage selon l'une des revendications 10 à 12, comprenant l'étape supplémentaire suivante :
libération de la pièce de jonction auxiliaire de soudage (E) par le dispositif d'alimentation en éléments (10), une fois que la pièce de jonction auxiliaire de soudage (E) et les couches de matériau ont été précontraintes entre le tampon d'électrode (4) et la matrice d'électrode (5).

14. Procédé d'assemblage selon l'une des revendications 10 à 13, comprenant l'étape supplémentaire suivante :
détection d'une force appliquée au tampon d'électrode (4) par la pièce de jonction auxiliaire de soudage (E) au moyen d'un capteur de force et/ou détection d'une distance parcourue par la pièce de jonction auxiliaire de soudage (E) en direction du tampon d'électrode (4) au moyen d'un dispositif d'alimentation en éléments (10).

15. Procédé d'assemblage selon la revendication 14, comprenant l'étape supplémentaire suivante :
transmission de la force détectée et/ou de la distance détectée à une unité de commande et
démarrage d'un envoi de la pièce de jonction auxiliaire de soudage (E) avec le tampon d'électrode (4) en direction de la butée d'électrode (5) après atteinte d'une force de consigne et/ou d'une valeur de consigne.

16. Procédé d'assemblage selon la revendication 15, dans lequel la force détectée et/ou la distance détectée sont transmises à une unité de commande du dispositif d'alimentation en éléments (10) et l'unité de commande du dispositif d'alimentation en éléments (10) permet alors à une commande centrale de l'appareil de placement et de soudage (1) de poursuivre le procédé d'assemblage ou indique que le procédé d'assemblage doit être poursuivi avec une certaine étape.

17. Procédé d'assemblage selon l'une des revendications 10 à 16, comprenant l'étape supplémentaire suivante :
enfoncement et soudage de la pièce de jonction auxiliaire de soudage (E) dans les couches de matériau,
de préférence refoulement et serrage de l'assemblage des couches de matériau et de la pièce de jonction auxiliaire de soudage (E) par application d'une force avec le tampon d'électrode (4), et
détachement du tampon d'électrode (4) et de la butée d'électrode (5) des couches de matériau assemblées.
